# DEMANDE DE BREVET EUROPEEN

(11) **EP 0 560 642 A1**
(43) Date de publication de la demande: **15.09.1993**
(21) Numéro de dépôt: 93400351.8
(22) Date de dépôt: 11.02.1993
(51) Int. Cl.: H05K 5/00, G06F 1/16

(54) **Dispositif pour contenir et protéger un disque dur, du type amovible d'un microordinateur**

(30) Priorité: 11.02.1992 FR 9201509
(71) Demandeur: GRESSET INFORMATIQUE, F-25000 Besançon (FR)
(72) Inventeur: Gresset, Alain, F-25000 Besancon (FR)
(74) Mandataire: Wagret, Frédéric

(57) **Abrégé**

s- Boîtier destiné à contenir un disque dur pour le stockage en mémoire de données informatiques, du type amovible et susceptible d'être engagé/désengagé par coulissement dans un logement récepteur prévu dans une unité centrale de micro-ordinateur, caractérisé en ce qu'il comprend :
- une cartouche à section en forme générale de U ;
- un berceau délimitant un logement de forme complémentaire audit disque dur et susceptible d'être engagé entre les branches latérales du U formé par ladite cartouche ;
- des premiers moyens de liaison dudit disque sur ledit berceau ; et
- des seconds moyens de liaison dudit berceau par rapport à ladite cartouche.

## Description

La présente invention concerne un dispositif pour contenir et protéger un disque-mémoire de stockage pour données informatiques (disque dur), du type amovible, c'est-à-dire susceptible d'être incorporé par coulissement dans un logement prévu dans une unité centrale de micro-ordinateur.

Les disques durs existants et proposés par les constructeurs, sont de tailles différentes. Il existe, par exemple d'une part des disques durs de hauteur de 1 inch (2,54 cm) et des disques durs de hauteur de 1,625 inch (4,13 cm).

Les dispositifs ou boîtiers connus, récepteurs de tels disques durs, présentent des inconvénients majeurs.

En effet, afin de permettre d'insérer le boîtier récepteur du disque dur, dans un logement de micro-ordinateur prévu pour un disque souple (norme 5 inches 1/4), le boîtier est conçu de telle manière qu'il ne peut, compte-tenu des contraintes d'encombrement en hauteur, accepter que des disques durs de hauteur de 1 inch. Il en résulte une limitation pour l'utilisateur qui se voit imposer un disque de capacité mémoire réduite.

On a tenté de façon connue de remédier à cette difficulté en prévoyant un boîtier récepteur de disques durs de hauteur de 1,625 inch, sous le forme d'un boîtier externe et indépendant de l'unité centrale du micro-ordinateur. Cette disposition présente un surcoût et un encombrement important qui le rend incommode pour l'utilisateur.

Des tentatives ont été effectuées afin de disposer un disque dur de hauteur de 1,625 inch, dans un boîtier du type amovible et susceptible de s'insérer dans un logement prévu pour un disque souple de type 5 inches 1/4. Cependant, ce type de boîtier connu, afin de recevoir un disque disque de hauteur de 1,625 inch, malgré les contraintes de hauteur mentionnées plus haut, présente l'inconvénient majeur d'une protection thermique et mécanique extrêmement réduite du disque dur. En effet, ces boîtiers n'offrent aux disques durs qu'une protection illusoire sous la forme d'une ceinture en matière plastique. En d'autres termes, ces boîtiers connus sacrifient la protection aux contraintes d'encombrement.

Ainsi, l'utilisateur, s'il veutdisposerd'un boitierré- cepteur d'un disque dur de 1,625 inch, n'a, à ce jour, d'autres choix que, soit un boîtier externe avec les inconvénients qui en résultent, soit un boîtier effectivement insérable dans le micro-ordinateur, mais dont la protection mécanique est quasiment inexistante.

La présente invention remédie à ces inconvénients et propose un boîtier amovible susceptible de recevoir des disques durs de différentes hauteurs, jusqu'à 1,625 inch, et susceptible d'être incorporé dans un logement de micro-ordinateur initialement prévu pour un disque souple du type 5 inches 1/4.

A cette fin, selon l'invention, le boîtier destiné à contenir un disque dur de stockage en mémoire de données informatiques, du type amovible et susceptible d'être engagé/désengagé par coulissement dans un logement récepteur prévu dans une unité centrale de micro-ordinateur, est caractérisé en ce qu'il comprend:
- une cartouche à section en forme générale de U;
- un berceau délimitant un logement de forme complémentaire au disque dur et susceptible d'être engagé entre les branches latérales du U formé par la cartouche;
- des premiers moyens de liaison du disque sur le berceau; et
- des seconds moyens de liaison du berceau par rapport à la cartouche.

De préférence, le berceau est constitué d'une plaque pourvue de deux rabats longitudinaux (gauche et droite) et de deux rabats transversaux (avant et arrière), les quatre rabats délimitant avec le fond du berceau un logement de forme parallélépipèdique.

L'invention sera bien comprise à la lumière des dessins annexés dans lesquels:
- La figure 1 est une vue en perspective montrant la cartouche;
- La figure 2 est une vue en coupe schématique montrant le principe général de l'invention assurant la protection du disque dur;
- La figure 3 montre une vue en perspective de la cartouche;
- La figure 4 montre une vue de côté de la cartouche de la figure 3;
- La figure 5 montre une vue schématique en perspective du berceau récepteur du disque dur;
- La figure 6 est une vue arrière de la cartouche et du berceau, à grande échelle;
- La figure 7 montre un détail de l'assemblage entre la plaque arrière et le rabat transversal arrière du berceau;
- Les figures 8 et 9 montrent des vues des faces respectivement avant et arrière de la plaque arrière;
- La figure 10 est une vue agrandie en coupe partielle de la plaque arrière;

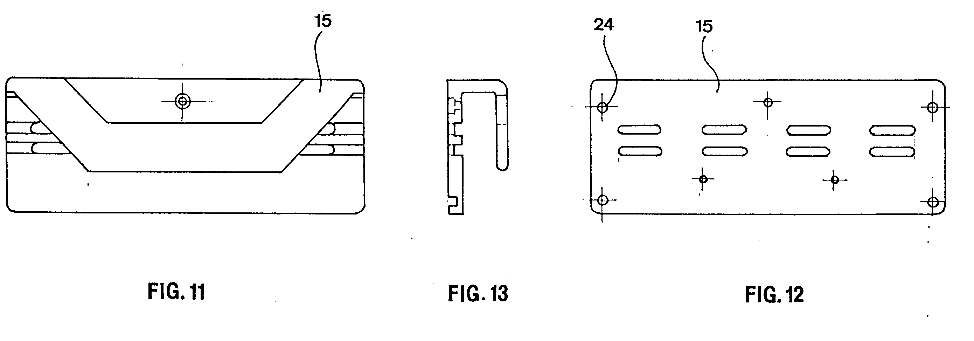

- Les figure 11 et 12 montrent les faces respectivement avant et arrière de la plaque avant; et
- La figure 13 est une vue en coupe de la plaque avant.

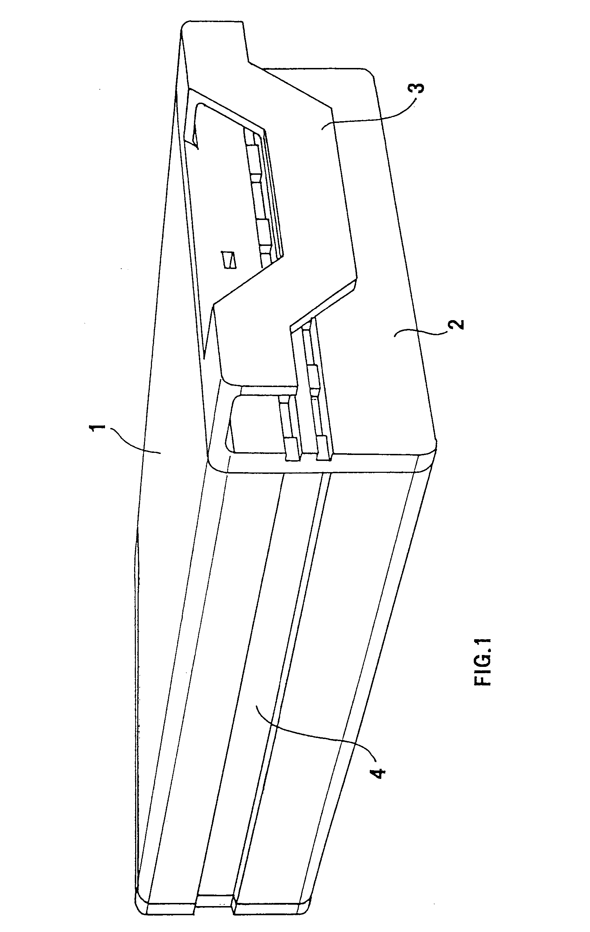

Le boîtier selon l'invention destiné à contenir un disque dur, est représenté en perspective à la figure 1, montrant la cartouche 1 et la plaque avant 2 munie d'une poignée de préhension 3 permettant à l'utilisateur de saisir le boîtier et de l'engager ou le désengager du logement prévu dans l'unité centrale d'un micro-ordinateur (non représenté et connu en lui-même). Le boîtier est de forme générale parallélépipèdique et comprend sur chaque face latérale, une rainure 4 destinée à coopérer avec un épaulement complémentaire prévu dans le logement de l'unité centrale du micro-ordinateur.

La figure 2 est une vue schématique en coupe, montrant le principe général du boîtier selon l'invention. Le disque dur se présente, de façon connue, sous la forme d'un bloc parallélépipèdique, présentant les dimensions approximatives suivantes: hauteur 40mm, longueur 175 mm et largeur 102mm.

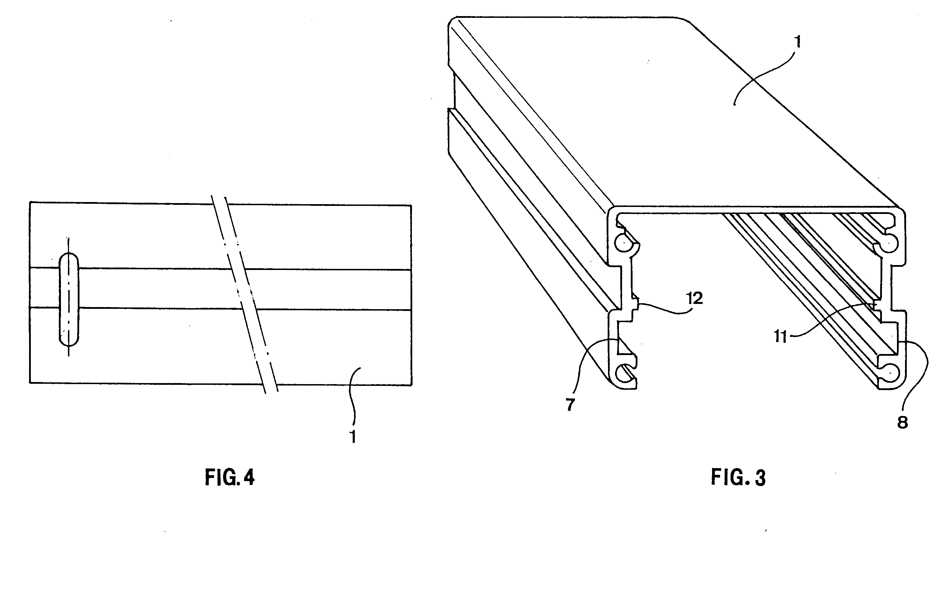

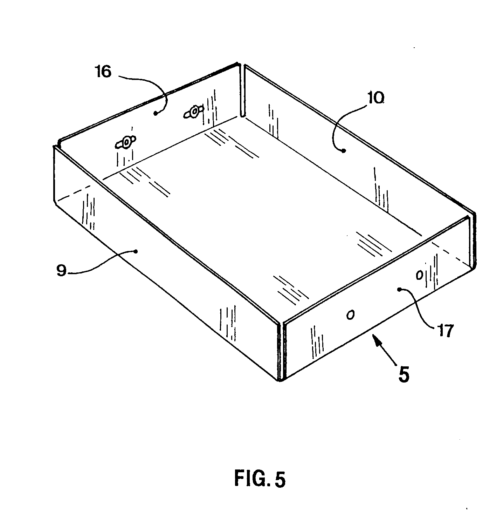

Selon l'invention, le boîtier comprend une cartouche 1 dont la section est en forme générale de U (voir figure 3),et un berceau 5 délimitant un logement de forme complémentaire au parallélépipède formé par le disque dur 6. La figure 5 montre en perspective une vue schématique du berceau 5, constitué d'une plaque en tôle délimitant un fond et pourvue de quatre rabats, dont deux rabats longitudinaux gauche et droite 9,10 et deux rabats transversaux 16,17. Les deux rabats transversaux forment un rabat avant 17 et un rabat arrière 16. Le berceau 5 est formé par exemple d'une tôle d'épaisseur d'environ 0,5mm.

Ainsi que montré sur la figure 3, les parois intérieures des branches 7 et 8 du U formé par la cartouche 1, comportent des rainures et épaulement dont le rôle sera précisé ultérieurement.

En se référant à nouveau à la figure 2, on voit que le berceau 5 est susceptible d'être engagé à l'intérieur de la cartouche 1, et plus précisément entre les branches 7 et 8 du U formé par la cartouche 1. Le fond 9 du berceau 5 est disposé, lorsque le berceau est en place, de façon qu'il affleure au niveau de l'ouverture du U de la cartouche 1.

Le disque dur 6 est fixé sur le berceau 5 par des vis de longueur de quelques millimètres, traversant les rabats longitudinaux (gauche et droit) 9, 10 et susceptibles de pénétrer dans des orifices taraudés prévus sur les faces correspondantes du disque dur 6. Les dimensions du berceau 5 par rapport à la cartouche 1 sont telle qu'il existe un léger jeu entre le berceau et la cartouche, de façon à permettre un mouvement de rotation ou de déplacement, de faible amplitude, de l'ordre de 1 à 2 mm.

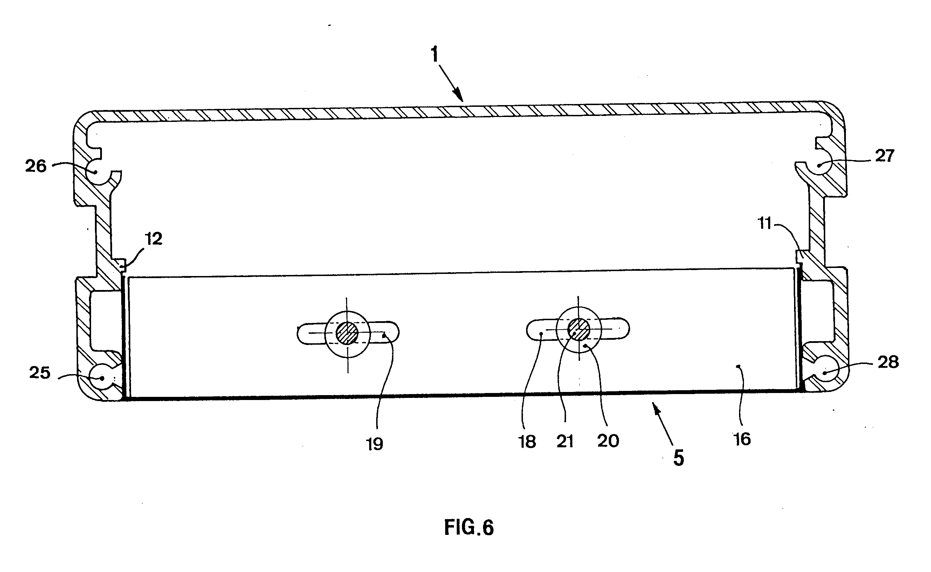

Plus particulièrement, le berceau est susceptible de se déplacer en translation verticale ou selon un mouvement de rotation par rapport à la cartouche 1. Le berceau se trouve limité dans ce mouvement par une butée définie par un épaulement respectivement 11 et 12 (voir figures 3 et 6), prévue sur les parois intérieures du U de la cartouche.

A la cartouche 1 sont associés une plaque avant 15 et une plaque arrière 14.

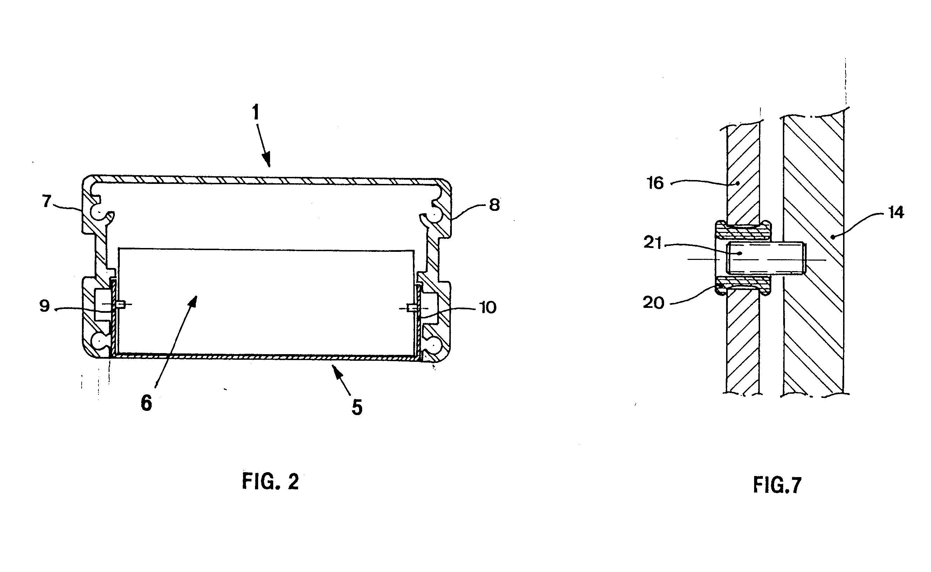

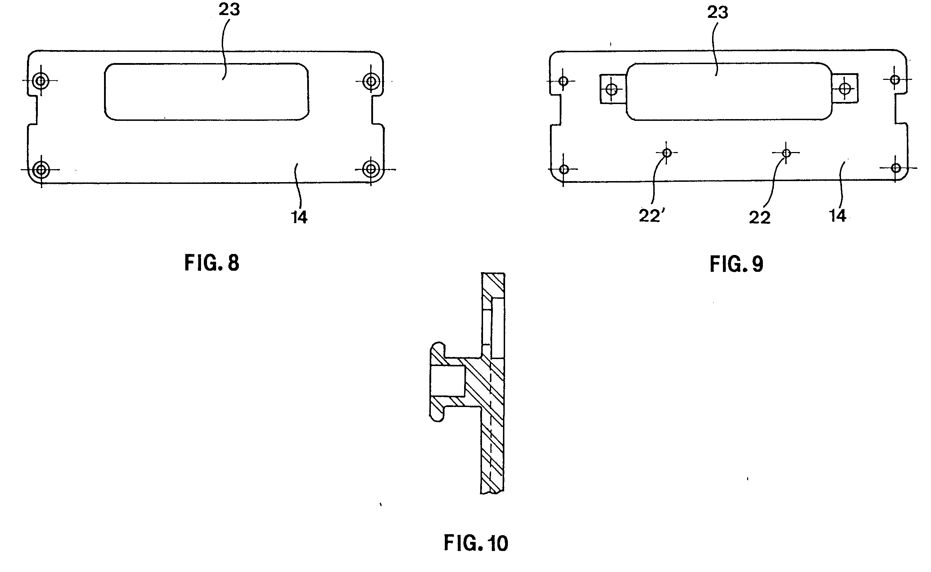

La plaque arrière 14 (figures 8 et 9) est rendue solidaire du rabat arrière 16 du berceau 5 par l'intermédiaire de moyens de liaison autorisant le mouvement du berceau par rapport à la cartouche. Les moyens de liaison comprennent une tige filetée et un élément d'isolation mécanique et électrique, constitué d'une bague en matériau élestiquement déformable et isolant électriquement, tel que décrit plus en détail ci-après en liaison avec les figures 6 et 7. Ainsi que montré sur ces dernières figures, le rabat arrière 16 comporte des lumières oblongues 18 et 19 dans lesquelles est susceptible d'être insérée une bague 20, de forme générale cylindrique ou torique, en caoutchouc par exemple, et de dimension telle que, une fois enfoncée à force dans le logement 18 (ou 19), par déformation, elle déborde de part et d'autre dudit logement, comme montré sur la figure 7. La bague 20 comprend un évidement central dans lequel est susceptible de venir se loger une tige filetée 21 vissée dans un trou borgne 22 prévu à cet effet dans la plaque arrière 14. La tige filetée 21 fait saillie par rapport à la plaque arrière 14 d'une longueur légèrement supérieure à l'épaisseur de la bague. La bague 20 empêche donc tout contact métal contre métal entre la plaque arrière 14, le rabat arrière 16 et la tige filetée 21, à des fins d'amortissement. La matière dont est constituée la bague 20, (par exemple caoutchouc), amortit mécaniquement en cas de vibrations ou de chocs. La plaque arrière 14 (figure 8 et 9) comporte deux trous borgnes 22 et 22' sur sa face tournée vers l'intérieur du berceau 5 (figure 9). La plaque arrière 14 comprend également une lumière 23, de forme générale rectangulaire, et destinée à permettre la fixation d'un connecteur de transmission des données du disque dur.

Il est prévu des moyens de fixation des plaques avant 15 et arrière 14 par rapport au corps de cartouche 1. Ces moyens de fixation sont constitués de tiges filetées de longueur légèrement inférieure à la longueur de la cartouche 1, et susceptibles d'être vissées dans des trous borgnes 24 (figure 12) prévus sur la face de la plaque avant 15 tournée vers l'intérieur du berceau 5. Les tiges filetées (non représentées, connues en elles-mêmes) sont logées dans des rainures longitudinales prévues sur les parois internes des branches du U formé par le corps de cartouche 1, tel que montré sur la figure 6 avec plus de détails.

Les rainures 25, 26, 27 et 28, de forme générale circulaire, sont prévues dans les parties d'extrémité des branches du U formé par le corps de cartouche. Les extrémités des tiges filetées du côté de la plaque arrière dépassent de cette dernière et sont associéés à un contre-écrou (non représenté). Les quatre tiges filetées assurent donc une solidarisation et une fixation efficace par compression, des plaques avant 15 et arrière 14 sur le corps de cartouche 1. par ailleurs, ainsi qu'indiqué ci-dessus, le berceau 5 récepteur du disque dur 6 est solidarisé aux plaques avant et arrière 14 et 15 de manière à permettre un léger mouvement du berceau 5 par rapport à la structure rigide formée par le corps de cartouche 1 et les plaques avant et arrière. Ce léger jeu est d'amplitude limitée par l'épaulement 11 prévu sur les parois intérieures de la cartouche (figure 6). En cas de chocs ou de vibrations, les bagues d'amortissement 20 reprennent la plupart des efforts; et elles participent en outre à

l'isolation électrique. Le disque dur 6 n'a donc aucun contact direct avec la cartouche 1.

On comprend que l'invention permet donc de résoudre le problème de l'amovibilité d'un disque dur, avec une protection efficace contre les chocs et cela dans un espace extrêmement limité, notamment en hauteur, compte-tenu des contraintes liées au logement prévu dans l'unité centrale du micro-ordinateur et destiné à recevoir le boîtier.

La présente invention n'est pas limitée au mode de représentation décrit en englobe au contraire toutes variantes telles que reprises dans les revendications ci-après.

## Revendications

1 - Boîtier (1) destiné à contenir un disque dur pour le stockage en mémoire de données informatiques, du type amovible et susceptible d'être engagé/désengagé par coulissement dans un logement récepteur prévu dans une unité centrale de micro-ordinateur, caractérisé en ce qu'il comprend:
- une cartouche (1) à section en forme générale de U;
- un berceau (5) délimitant un logement de forme complémentaire auditdisqueduret susceptible d'être engagé entre les branches latérales du U formé par ladite cartouche de manière que le fond dudit berceau (5) affleure sensiblement au niveau des extrémités des branches dudit U;
- des premiers moyens de liaison dudit disque sur ledit berceau; et
- des seconds moyens de liaison dudit berceau par rapport à ladite cartouche.

2 - Boîtier selon la revendication 1, caractérisé en ce que ledit berceau comporte deux parois longitudinales (9, 10) , deux parois transversales (avant et arrière 16, 17), et un fond, délimitant ainsi un logement de forme parallélépipèdique apte à recevoir ledit disque dur.

3 - Boîtier selon l'une des revendications 1 à 2, caractérisé en ce qu'il comprend en outre une plaque avant (15) et une plaque arrière (14), toutes deux complémentaires aux ouvertures transversales (avant et arrière) délimitées par le U de ladite cartouche (1).

4 - Boîtier selon l'une des revendications précédentes, caractérisé en ce que lesdits seconds moyens de liaison comprennent des moyens d'isolation mécanique et électrique.

5 - Boîtier selon la revendication 4, caractérisé en ce que les moyens d'isolation comportent une rondelle torique ou cylindrique en matériau isolant et déformable élastiquement.

6 - Boîtier selon l'une quelconque des revendications 1 à 5, caractérisé en ce que lesdits moyens de liaison sont aptes à autoriser un léger jeu entre le berceau et la cartouche.

7 - Boîtier selon l'une des revendications précédentes, caractérisé en ce que les faces intérieures de chaque branche dudit U formé par la cartouche, comportent chacune un épaulement (11, 12) formant butée pour ledit berceau (5).

8 - Boîtier selon les revendications 2 et 3, caractérisé en ce que l'une au moins des parois transversales (avant ou arrière 16, 17) est pourvue d'une lumière (18, 19) dans laquelle est susceptible de pénétrer un ergot solidaire d'une des plaques (avant ou arrière), et faisant saillie par rapport à cette dernière.

9 - Boîtier selon la revendication 8, caractérisé en ce que les parois transversales (avant et arrière) du berceau comportent une série de lumières, chacune correspondant à une taille de disque dur donnée.

10 - Boîtier selon la revendication 2, caractérisé en ce qu'il est prévu un feuille de mousse plastique entre la paroi intérieure des parois du berceau (5) et le disque dur.

11 - Boîtier selon la revendication 3, caractérisé en ce que la cartouche est constituée d'un profilé en aluminium comprenant au moins une rainure (25, 27) disposée sur la face intérieure de chaque branche du U, et susceptible d'être associée à une tige filetée solidaire des plaques respectives avant et arrière.
